(19) Europäisches Patentamt
European Patent Office
Office européen des brevets

(11) EP 3 199 568 B1

(12) **EUROPEAN PATENT SPECIFICATION**

(45) Date of publication and mention of the grant of the patent:
**16.12.2020 Bulletin 2020/51**

(21) Application number: **15843256.7**

(22) Date of filing: **24.09.2015**

(51) Int Cl.:
***C08G 69/48*** *(2006.01)*
***C08G 63/66*** *(2006.01)*
***C08G 69/36*** *(2006.01)*
***C08G 69/40*** *(2006.01)*
***B60C 1/00*** *(2006.01)*
***C08G 81/00*** *(2006.01)*
***C08G 69/14*** *(2006.01)*

(86) International application number:
**PCT/JP2015/076981**

(87) International publication number:
**WO 2016/047709 (31.03.2016 Gazette 2016/13)**

(54) **TIRE**

REIFEN

PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.09.2014 JP 2014193426**

(43) Date of publication of application:
**02.08.2017 Bulletin 2017/31**

(73) Proprietor: **Bridgestone Corporation**
**Tokyo 104-8340 (JP)**

(72) Inventors:
- **KYO, Soichi**
  **Tokyo 104-8340 (JP)**
- **ITOH, Yuki**
  **Tokyo 104-8340 (JP)**

(74) Representative: **Oxley, Robin John George**
**Marks & Clerk LLP**
**15 Fetter Lane**
**London EC4A 1BW (GB)**

(56) References cited:
**WO-A1-2009/093695**
**WO-A1-2014/168011**
**DE-A1- 10 017 149**
**JP-A- H 083 427**
**JP-A- S5 936 130**
**JP-A- S57 125 218**
**JP-A- S58 174 002**
**JP-A- S58 198 527**
**JP-A- 2008 150 582**
**JP-A- 2009 255 489**
**JP-A- 2009 291 962**
**JP-A- 2014 037 470**
**JP-A- 2014 037 551**
**US-A- 5 213 891**
**US-A- 5 342 918**
**US-A1- 2006 009 610**
**US-A1- 2013 295 309**
**US-A1- 2014 124 114**
**US-B1- 6 994 913**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### Technical Field

The present invention relates to a tire to be mounted on a rim, and particularly relates to a tire in which at least a part of a tire case is made of a resinous material.

### Background Art

Conventionally, pneumatic tires composed of, for example, rubber, an organic fiber material and a steel member have been used for vehicles such as passenger cars.

In recent years, use in tire materials of resin materials, particularly thermoplastic resins and thermoplastic elastomers, has been studied since resins are lightweight, are highly shapeable, and can be easily recycled. These thermoplastic polymer materials (such as thermoplastic elastomers or thermoplastic resin materials) have many advantages from the viewpoint of improving productivity, such as being injection-moldable. For example, a tire in which a polyamide-based thermoplastic elastomer is used as a thermoplastic polymer material is proposed in Japanese Patent Application Laid-Open (JP-A) No. 2012-46030. Reference is also made to US 2014/124114, which discloses an inner liner for a pneumatic tire and JP 2014-037551, which discloses a rubber composition for a side wall.

## SUMMARY OF INVENTION

### Technical Problem

Tires in which thermoplastic polymer materials are used can be manufactured more easily at lower cost than conventional tires made of rubber. However, there is room for improvement from the viewpoint of low rolling resistance (low-loss property), compared to conventional tires made of rubber. Also, it is desirable that tires in which thermoplastic polymer materials are used are mountable on rims, and can be excellently fitted to rims (i.e., have excellent fittability to rims) such that internal air does not leak when the tires are mounted on rims.

Therefore, for tires made of thermoplastic polymer materials, there is a demand that the low-loss property be excellent and that the tires can be excellently fitted to rims, and that both of these are provided together.

In view of the above circumstances, an embodiment of the present invention aims to provide a tire that is formed using a resinous material and that achieves both of excellent low-loss property and excellent fittability to a rim.

### Solution to Problem

[1] A tire including a circular tire frame formed from a resinous material,
the resinous material comprising a resin component,
the resin component including at least one thermoplastic elastomer selected from the group consisting of a polyamide-based thermoplastic elastomer and a polyester-based thermoplastic elastomer,
the resin component being comprised in an amount of 50% by mass or more with respect to a total amount of the resinous material,
the polyamide-based thermoplastic elastomer including a hard segment comprising a polyamide, soft segment, a soft segment comprising at least one selected from the group consisting of a polyester and a polyether, and a connection portion that connects two or more segments, the polyester-based thermoplastic elastomer comprising a hard segment comprising an aromatic polyester, a soft segment comprising at least one selected from the group consisting of an aliphatic polyester and an aliphatic polyether, and a connection portion that connects two or more segments,
wherein a difference in a solubility parameter (SP value), in absolute value, between the soft segment and the connection portion is 7.7 or less, and
wherein the connection portion comprises a structural unit derived from an aliphatic dicarboxylic acid, a structural unit derived from an alicyclic dicarboxylic acid, or a structural unit derived from an aromatic dicarboxylic acid.

### Advantageous Effects of the Invention

According to one embodiment of the present invention, a tire that is formed using a resinous material, and that achieves both of an excellent low-loss property and excellent fittability to a rim, can be provided.

BRIEF DESCRIPTION OF THE DRAWINGS

FIG. 1A is a perspective view illustrating a cross-section of a part of a tire according to one embodiment of the invention.
FIG. 1B is a cross-sectional view of a bead part mounted on a rim.
FIG. 2 is a cross-sectional view taken along a tire rotation axis that illustrates a state in which a reinforcing cord is embedded in a crown portion of a tire case of a tire according to a first embodiment.

DESCRIPTION OF EMBODIMENTS

The tire according to one embodiment of the invention has a circular tire frame formed from a resinous material. The resinous material includes a thermoplastic elastomer, the thermoplastic elastomer including a hard segment, a soft segment, and a connection portion that connects two or more segments, wherein a difference in a solubility parameter (hereinafter referred to as "SP value"), in absolute value, between the soft segment and the connection portion is 7.7 or less.
Since the thermoplastic elastomer included in the resinous material contains a hard segment and a soft segment, a tire having the properties of these segments can be obtained. However, there may be a case in which the properties of the respective segments are not obtained sufficiently as expected, owing to a region in which the hard segment and the soft segment co-exist (hereinafter also referred to as "intermediate phase"), which exists at the interface of these segments.
From this viewpoint, the difference in SP value between the soft segment and the connection portion in the thermoplastic elastomer included in the tire frame of the tire is first reduced to enhance compatibility between the soft segment and the connection portion, thereby facilitating assembly among the soft segments in the thermoplastic elastomer. For example, in a case in which the thermoplastic elastomer has a sea-island structure formed therein with the soft segment as an island (domain phase) and the hard segment as a sea (matrix phase), the soft segment is capable of forming a large island in the tire. As a result, the surface area of the interface between the island of the soft segment and the matrix phase of the hard segment is smaller than in a case in which the island is smaller. Therefore, the thermoplastic elastomer included in the tire frame has less intermediate phases present in the interface, and thereby helps the hard segment and the soft segment to exert their respective original properties. Because of this, the use of such a thermoplastic elastomer results in utilizing the properties which each segment has in association with low-loss property and fittability to a rim, allowing these properties to be provided together.
From the above, it follows that the tire to which the thermoplastic elastomer is applied is formed using a resinous material and has an excellent low-loss property and excellent fittability to a rim.
As used herein, a numerical range indicated using "to" means a range including the figures written before and after "to" as the minimum value and the maximum value, respectively.
In a case in which a plurality of substances corresponding to each component are present in a composition described herein, the amount of each component in the composition means the total amount of the plurality of substances present in the composition, unless otherwise specified.

<< Resinous Material >>

< Thermoplastic Elastomer >

As mentioned above, the tire has a tire frame formed using a resinous material. The thermoplastic elastomer used as the resinous material has at least a hard segment, a soft segment, and a connection portion that connects two or more segments. As used herein, a "connection portion" refers to a connection portion that connects two or more segments. Specific examples of the connection portion include, for example, a connection portion between a hard segment and a soft segment, a connection portion between hard segments, and a connection portion between soft segments. Examples of the connection portion include, for example, a portion bound by a chain extender as described below.
In addition, the difference in SP value, in absolute value, between the soft segment and the connection portion in the thermoplastic elastomer used for the tire frame is 7.7 or less. In a case in which the difference in SP value, in absolute value, exceeds 7.7, the island in the sea-island structure tends to be smaller and the surface area of the interface tends to increase, resulting in an increase in intermediate phases and failure to allow the original properties of each of the hard segment and the soft segment to be exerted, whereby it becomes difficult to provide both low-loss property and fittability to a rim.

In this regard, the resinous material may further contain a thermoplastic elastomer other than the above-described thermoplastic elastomer, or any optional component. As used herein, the term "resin" has a concept encompassing a thermoplastic resin and a thermosetting resin, but does not include natural rubber.

For the thermoplastic elastomer, the difference in SP value, in terms of absolute value, between the soft segment and the connection portion is preferably 7.3 or less, more preferably 6.0 or less, still more preferably 3.1 or less, and particularly preferably 2.2 or less. The closer to 0 the difference in the SP value between them is, the more preferable it is, from the viewpoint of enhancing the compatibility between the soft segment and the connection portion.

The SP value of each of the segments and the connection portion is not particularly limited as long as the difference in SP value between the soft segment and the SP value of the connection portion is 7.7 or less. For example, the SP value of a hard segment is preferably from 18.0 to 28.0, and more preferably from 20.0 to 26.0. The SP value of a soft segment is preferably from 14.0 to 24.0, more preferably to 18.0 to 20.0. The SP value of a connection portion is preferably from 14.0 to 26.0, more preferably from 19.0 to 26.0, still more preferably from 19.0 to 24.9, and particularly preferably from 19.6 to 21.1.

The SP value is a Hildebrand SP value and is a value calculated from an evaporative latent heat necessary for 1 $cm^3$ of liquid to vaporize. Specifically, it is calculated using the following Equation a. In Equation a, $\delta$ represents an SP value $(MPa)^{1/2}$, $\Delta H$ represents an enthalpy of vaporization, R represents a gas constant, T represents an absolute temperature, and V represents a volume.

$$\text{(Equation a)}: \delta = [(\Delta H - RT) / V]^{1/2}$$

An SP value of a triblock polymer (for example, PPG-PTMG-PPG) may be calculated by calculating the SP values of respective blocks in accordance with the above-described method and then taking the content proportions of respective blocks into consideration.

Specifically, for example, in a case of a triblock polymer PPG-PTMG-PPG in which the SP value of PPG is 18, the SP value of PTMG is 18.9, and the proportion of PPG in the triblock is 40%, the SP value of the triblock polymer is then 18.6 as the result of calculating in accordance with the following Equation b.

$$\text{(Equation b)} \quad 18 \times 0.4 + 18.9 \times (1 - 0.4) = 18.6$$

In this case, PPG indicates derivation from polypropylene glycol and PTMG indicates derivation from polytetramethylene glycol.

Examples of thermoplastic elastomers applicable to embodiments of the invention include, polyamide-based thermoplastic elastomers (or Thermoplastic Amid elastomer, TPA), and polyester-based thermoplastic elastomers (or Thermoplastic polyester elastomer, TPC). The thermoplastic elastomer according to the present invention comprises at least one selected from the group consisting of a polyamide-based thermoplastic elastomer and a polyester-based thermoplastic elastomer.

Polyamide-based thermoplastic elastomers (TPA), and polyester-based thermoplastic elastomers (TPC) are preferable because these are polymers which have a connection portion based on a polyaddition reaction and which are polymers whose thermoplastic elastomer properties can be changed only by changing the structure of the connection portion, and because such a technique is established.

Further, among polyamide-based thermoplastic elastomers (TPA), and polyester-based thermoplastic elastomers (TPC), polyamide-based thermoplastic elastomers (TPA) are more preferable from the viewpoints of property change by water and of hydrolyzability. The reason is that polyamide-based thermoplastic elastomers (TPA) tend to absorb less water than polyurethane-based thermoplastic elastomers (TPU) and that the amide bond constituting a polyamide-based thermoplastic elastomer (TPA) is more resistant to water and less decomposable than the ester bond constituting a polyester-based thermoplastic elastomer (TPC).

Hereinbelow, description will be given to the polyamide-based thermoplastic elastomers (TPA), and polyester-based thermoplastic elastomers (TPC), which are used as thermoplastic elastomers in embodiments of the invention.

(Polyamide-based Thermoplastic Elastomer)

As used herein, the term "polyamide-based thermoplastic elastomer" means a thermoplastic elastomer consisting of a copolymer of a polymer which forms a part or the whole of a crystalline hard segment having a high melting point and a polymer which forms a part or the whole of a non-crystalline soft segment having a low glass transition temperature, in which the polymer which forms a part or the whole of a hard segment has an amide bond (-CONH-) in

a backbone thereof.

Examples of the polyamide-based thermoplastic elastomers include a material in which a polyamide forms a part or the whole a hard segment which is crystalline and has a high melting point, and another polymer (for example, polyester or polyether) forms a part or the whole of a soft segment which is non-crystalline and has a low glass transition temperature.

- Hard Segment -

Examples of polyamide forming a part or the whole of a hard segment include a polyamide synthesized by using a monomer represented by the following Formula (1) or Formula (2).

Formula (1): $H_2N\text{-}R_1\text{-}COOH$

In Formula (1), $R^1$ represents a hydrocarbon molecular chain having from 2 to 20 carbon atoms or an alkylene group having from 2 to 20 carbon atoms.

Formula (2)

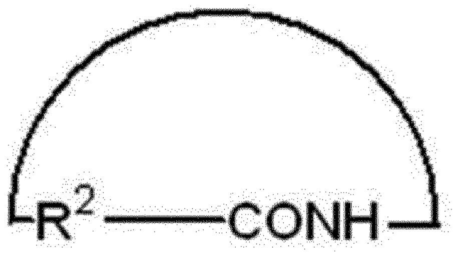

In Formula (2), $R^2$ represents a hydrocarbon molecular chain having from 3 to 20 carbon atoms or an alkylene group having from 3 to 20 carbon atoms.

In Formula (1), $R^1$ is preferably a hydrocarbon molecular chain having from 3 to 18 carbon atoms or an alkylene group having from 3 to 18 carbon atoms, more preferably a hydrocarbon molecular chain having from 4 to 15 carbon atoms or an alkylene group having from 4 to 15 carbon atoms, and particularly preferably a hydrocarbon molecular chain having from 10 to 15 carbon atoms or an alkylene group having from 10 to 15 carbon atoms. In Formula (2), $R^2$ is preferably a hydrocarbon molecular chain having from 3 to 18 carbon atoms or an alkylene group having from 3 to 18 carbon atoms, more preferably a hydrocarbon molecular chain having from 4 to 15 carbon atoms or an alkylene group having from 4 to 15 carbon atoms, and particularly preferably a hydrocarbon molecular chain having from 10 to 15 carbon atoms or an alkylene group having from 10 to 15 carbon atoms.

Examples of monomers represented by the above Formula (1) or Formula (2) include a ω-aminocarboxylic acid and a lactam. Examples of the polyamide forming a part or the whole of a hard segment include a polycondensate of a ω-aminocarboxylic acid, a polycondensate of a lactam, and a co-polycondensate of a diamine and a dicarboxylic acid.

Examples of the ω-aminocarboxylic acid include an aliphatic ω-aminocarboxylic acid having from 5 to 20 carbon atoms, such as 6-aminocaproic acid, 7-aminoheptanoic acid, 8-aminooctanoic acid, 10-aminocapric acid, 11-aminoundecanoic acid, or 12-aminododecanoic acid. Examples of the lactam include an aliphatic lactam having from 5 to 20 carbon atoms, such as lauryl lactam, ε-caprolactam, undecanelactam, ω-enantholactam, or 2-pyrrolidone.

Examples of the diamine include diamine compounds such as an aliphatic diamine having from 2 to 20 carbon atoms, such as ethylenediamine, trimethylenediamine, tetramethylenediamine, hexamethylenediamine, heptamethylenediamine, octamethylenediamine, nonamethylenediamine, decamethylenediamine, undecamethylenediamine, dodecamethylenediamine, 2,2,4-trimethylhexamethylenediamine, 2,4,4-trimethylhexamethylenediamine, 3-methylpentamethylenediamine, or meta-xylene diamine. The dicarboxylic acid may be represented by $HOOC\text{-}(R^3)m\text{-}COOH$, wherein $R^3$ represents a hydrocarbon molecular chain having from 3 to 20 carbon atoms, and m represents 0 or 1. Examples of the dicarboxylic acid include an aliphatic dicarboxylic acid having from 2 to 22 carbon atoms, such as oxalic acid, succinic acid, glutaric acid, adipic acid, pimelic acid, suberic acid, azelaic acid, sebacic acid, or dodecanedioic acid.

Examples of the polyamide forming a part or the whole of a hard segment include a polyamide (polyamide 6) obtained by ring-opening polycondensation of ε-caprolactam, a polyamide (polyamide 11) obtained by ring-opening polycondensation of undecanelactam, a polyamide (polyamide 12) obtained by ring-opening polycondensation of lauryl lactam, a polyamide (polyamide 12) obtained by polycondensation of 12-aminododecanoic acid, a polycondensate polyamide (polyamide 66) of a diamine and a dibasic acid, and a polyamide (amide MX) including metaxylenediamine as a structural unit.

Polyamide 6 can be expressed by, for example, $\{CO\text{-}(CH_2)_5\text{-}NH\}_n$, wherein n represents the number of repeating

units, which may be freely set. Here, n is preferably from 2 to 100, and more preferably from 3 to 50.

Polyamide 11 can be expressed by, for example, $\{CO-(CH_2)_{10}-NH\}_n$, wherein n represents the number of repeating units, which may be freely set. Here, n is preferably from 2 to 100, and more preferably from 3 to 50.

Polyamide 12 can be expressed by, for example, $\{CO-(CH_2)_{11}-NH\}_n$, wherein n represents the number of repeating units, which may be freely set. Here, n is preferably from 2 to 100, and more preferably from 3 to 50.

Polyamide 66 can be expressed by, for example, $\{CO(CH_2)_4CONH(CH_2)_6NH\}_n$, wherein n represents the number of repeating unit, which may be freely set. Here, n is preferably from 2 to 100, and more preferably from 3 to 50.

Amide MX, which includes metaxylenediamine as a structural unit, can be represented by, for example, the following structural unit (A-1), wherein n in (A-1) represents the number of repeating units, which may be freely set. Here, n is preferably from 2 to 100, and more preferably from 3 to 50.

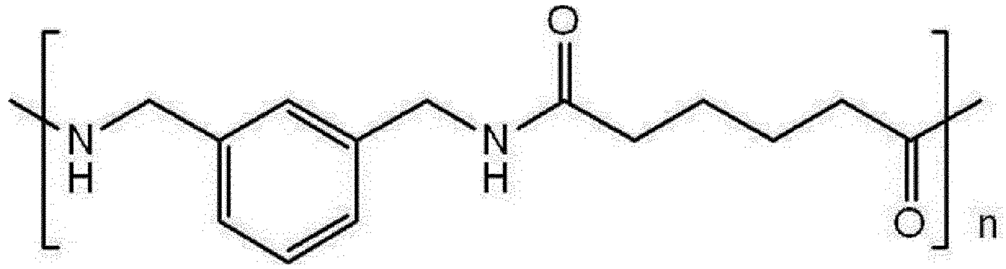

(A-1)

The polyamide-based thermoplastic elastomer preferably includes a polyamide (polyamide 12) having a unit structure represented by $-[CO-(CH_2)_{11}-NH]-$ as a hard segment. As mentioned above, polyamide 12 may be obtained by ring-opening polycondensation of lauryl lactam or polycondensation of 12-aminododecanoic acid.

- Soft Segment -

Examples of polymer forming a part or the whole of a soft segment include, for example, a polyester and a polyether, further include polyethylene glycol, polypropylene glycol, polytetramethylene ether glycol (PTMG), and an ABA-type triblock polyether, which may be used singly or in combination of two or more thereof. A polyether diamine, which may be obtained by a reaction of ammonia with the terminal of a polyether, may be used. For instance, an ABA-type triblock polyether diamine may be used.

Here, the "ABA-type triblock polyether" refers to a polyether represented by the following Formula (3).

Formula (3)

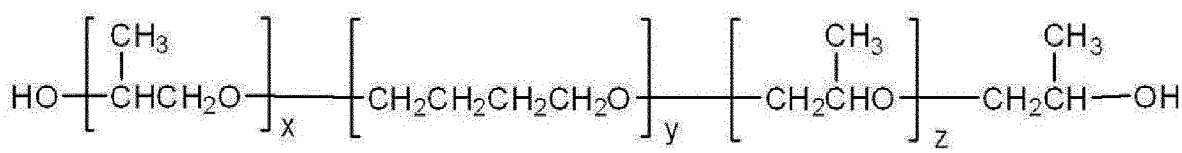

In Formula (3), each of x and z independently represents an integer from 1 to 20, and y represents an integer from 4 to 50.

In Formula (3), each of x and z is preferably an integer from 1 to 18, and more preferably an integer from 1 to 16, particularly preferably an integer from 1 to 14, and most preferably an integer from 1 to 12. In Formula (3), y is preferably an integer from 5 to 45, more preferably an integer from 6 to 40, particularly preferably an integer 7 to 35, and most preferably an integer from 8 to 30.

The "ABA-type triblock polyether diamine" may be a polyether diamine represented by the following Formula (N).

Formula (N)

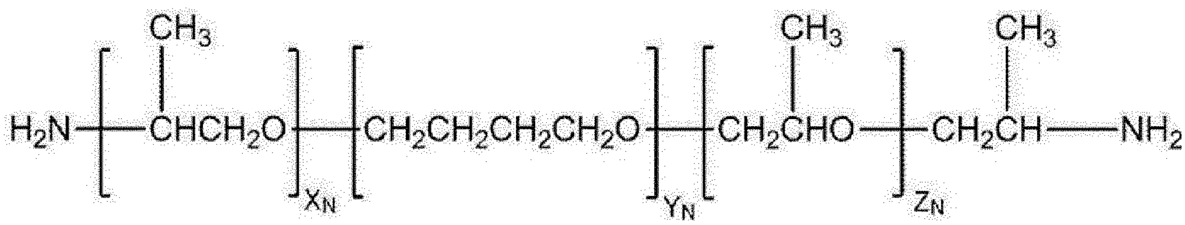

In Formula (N), each of $X_N$ and $Z_N$ independently represents an integer from 1 to 20, and $Y_N$ represents an integer from 4 to 50.

In Formula (N), each of $X_N$ and $Z_N$ is preferably an integer from 1 to 18, more preferably an integer from 1 to 16, particularly preferably an integer from 1 to 14, and most preferably an integer from 1 to 12. In Formula (N), $Y_N$ is preferably an integer from 5 to 45, more preferably an integer from 6 to 40, particularly preferably an integer from 7 to 35, and most preferably an integer from 8 to 30.

The combination of a hard segment and a soft segment is, for example, a combination of any of the above examples of a hard segment and any of the above examples of a soft segment. Among them, the combination of a hard segment and a soft segment is preferably a combination of a ring-opening polycondensate of lauryllactam and polyethylene glycol, a combination of a ring-opening polycondensate of lauryllactam and polypropylene glycol, a combination of a ring-opening polycondensate of lauryllactam and polytetramethylene ether glycol, a combination of a ring-opening polycondensate of lauryllactam and an ABA-type triblock polyether, a combination of a ring-opening polycondensate of lauryllactam and an ABA-type triblock polyether diamine, a combination of a polycondensate of aminododecanoic acid and polyethylene glycol, a combination of a polycondensate of aminododecanoic acid and polypropylene glycol, a combination of a polycondensate of aminododecanoic acid and polytetramethylene ether glycol, a combination of a polycondensate of aminododecanoic acid and an ABA-type triblock polyether, or a combination of aminododecanoic acid and an ABA-type triblock polyether diamine, and particularly preferably a combination of a ring-opening polycondensate of lauryllactam and an ABA-type triblock polyether, a combination of a ring-opening polycondensate of lauryllactam and an ABA-type triblock polyether diamine, a combination of a polycondensate of aminododecanoic acid and an ABA-type triblock polyether, or a combination of a polycondensate of aminododecanoic acid and an ABA-type triblock polyether diamine.

The polymer forming a part or the whole of a soft segment may include a diamine, such as a branched saturated diamine having from 6 to 22 carbon atoms, a branched alicyclic diamine having from 6 to 16 carbon atoms, or norbornane diamine, as a monomer unit. A branched saturated diamine having from 6 to 22 carbon atoms, a branched alicyclic diamine having from 6 to 16 carbon atoms, and norbornane diamine may be used singly, or in combination of two or more thereof. These diamines are preferably used in combination with the ABA-type triblock polyether or the ABA-type triblock polyether diamine described above.

Examples of the branched saturated diamine having from 6 to 22 carbon atoms include 2,2,4-trimethyl-1,6-hexanediamine, 2,4,4-trimethyl-1,6-hexanediamine, 1,2-diaminopropane, 1,3-diaminopentane, 2-methyl-1,5-diaminopentane, and 2-methyl-1,8-diaminooctane.

Examples of the branched alicyclic diamine having from 6 to 16 carbon atoms include 5-amino-2,2,4-trimethyl-1-cyclopentanemethylamine and 5-amino-1,3,3-trimethylcyclohexane methyl amine. Each of these diamines may be in the cis-form or the trans-form, or a mixture of these isomers.

Examples of the norbornane diamine include 2,5-norbornane dimethyl amine, 2,6-norbornane dimethyl amine, and a mixture thereof.

The polymer forming a part or the whole of a soft segment may include other diamine compounds than those described above, as monomer units. Examples of other diamine compounds include an aliphatic diamine such as ethylene diamine, trimethylene diamine, tetramethylene diamine, hexamethylene diamine, heptamethylene diamine, octamethylene diamine, nonamethylene diamine, decamethylene diamine, undecamethylene diamine, dodecamethylene diamine, 2,2,4-trimethylhexamethylene diamine, 2,4,4-trimethylhexamethylene diamine, or 3-methylpentanemethylene diamine, an alicylic diamine such as bis(4-aminocyclohexyl)methane, bis(4-aminocyclohexyl)propane, 1,3-bis(aminomethyl)cyclohexane, or 1,4-bis(aminomethyl)cyclohexane, and an aromatic diamine such as metaxylylene diamine or paraxylylene diamine.

These diamines may be used singly, or in combination of two or more thereof, as appropriate.

- Connection Portion -

As described above, the connection portion in the polyamide-based thermoplastic elastomer is, for example, a moiety bound by a chain extender.

The chain extender is a dicarboxylic acid. As the dicarboxylic acid, at least one selected from the group consisting of an aliphatic dicarboxylic acid, an alicyclicdicarboxylic acid, and an aromatic dicarboxylic acid, or any derivative thereof is used.

Specific examples of the dicarboxylic acid include: aliphatic dicarboxylic acids including a linear aliphatic dicarboxylic acid having from 2 to 25 carbons, such as adipic acid, decanedicarboxylic acid, oxalic acid, succinic acid, glutaric acid, pimelic acid, suberic acid, azelaic acid, sebacic acid, or dodecanedioic acid; a dimerized aliphatic dicarboxylic acid having from 14 to 48 carbon atoms, that is a dimerized unsaturated fatty acid obtained by fractional distillation of a triglyceride, and hydrogenated products thereof; an alicyclic dicarboxylic acid such as 1,4-cyclohexane dicarboxylic acid; and an aromatic dicarboxylic acid such as terephthalic acid or isophthalic acid. Among these, dodecanedioic acid, eicosanedioic acid, phenylenediacetic acid, terephthalic acid, and adipic acid are preferable.

- Molecular Weight -

The weight average molecular weight of a polyamide-based thermoplastic elastomer included in the resinous material is, for example, from 15,700 to 200,000. When the weight average molecular weight of a polyamide-based thermoplastic elastomer is less than 15,700, the fittability to a rim may be reduced. When the weight average molecular weight of a polyamide-based thermoplastic elastomer exceeds 200,000, the melt viscosity increases and may undesirably cause insufficient filling for a tire frame, and hence it may be necessary to increase forming temperature and mold temperature. In a case in which the forming temperature and the mold temperature are increased to prevent insufficient filling, the cycle time becomes longer and productivity is decreased. The weight average molecular weight of a polyamide-based thermoplastic elastomer is preferably from 20,000 to 160,000. The weight average molecular weight of a polyamide-based thermoplastic elastomer may be measured by Gel Permeation Chromatography (GPC) using, for example, a GPC (Gel Permeation Chromatography) system such as "HLC-8320 GPC EcoSEC" available from TOSOH CORPORATION.

The number average molecular weight of a polymer (polyamide) forming a part or the whole of a hard segment is preferably from 300 to 15,000, from the viewpoint of the melt moldability. The number average molecular weight of a polymer forming a part or the whole of a soft segment is preferably from 200 to 6,000, from the viewpoint of the toughness and the low-temperature flexibility.

In the polyamide-based thermoplastic elastomer, the mass ratio (x:y) between the hard segment (x) and the soft segment (y) is preferably from 50:50 to 90:10, more preferably from 50:50 to 80:20, still more preferably from 50:50 to 77:23, and particularly preferably from 50:50 to 75:25, from the viewpoint of moldability.

The content of the hard segment in the polyamide-based thermoplastic elastomer is preferably from 5 to 95% by mass, more preferably from 10 to 90% by mass, and particularly preferably from 15 to 90% by mass, with respect to the total amount of the polyamide-based thermoplastic elastomer.

The content of the soft segment in the polyamide-based thermoplastic elastomer is preferably from 10 to 95% by mass, more preferably from 10 to 90% by mass, and particularly preferably from 10 to 90% by mass, with respect to the total amount of the polyamide-based thermoplastic elastomer.

In a case in which the chain extender is used, the content thereof is preferably set so that the molar number of the hydroxyl groups or the amino groups of the monomer forming a part or the whole of the soft segment is approximately equal to that of the carboxyl groups of the chain extender.

The polyamide-based thermoplastic elastomer can be synthesized by co-polymerizing, by a known method, a polymer forming a part or the whole of the hard segment and a polymer forming a part or the whole of the soft segment.

For example, the polyamide-based thermoplastic elastomer can be obtained by polymerizing a monomer forming a part or the whole of a hard segment (for example, a ω-aminocarboxylic acid such as 12-aminododecanoic acid, or lactam such as lauryl lactam) and a chain extender (such as adipic acid or sebacic acid) in a vessel, and then further polymerizing with the addition of a monomer forming a part or the whole of a soft segment (such as an ABA-type triblock polyether or an ABA-type triblock polyether diamine).

In particular, in a case in which a ω-aminocarboxylic acid is used as a monomer forming a part or the whole of a hard segment, the synthesis can be done by performing melt-polymerization at ambient pressure, or melt-polymerization at ambient pressure followed by melt-polymerization at reduced pressure. In a case in which lactam is used as a monomer forming a part or the whole of a hard segment, the elastomer can be manufactured by a method consisting of melt polymerization under a pressure of from 0.1 to 5MPa with the coexistence of an appropriate amount of water, followed by melt-polymerization at ambient pressure and/or melt-polymerization at reduced pressure. These synthetic reactions can be performed either in a batch method or in a continuous method. For the above-mentioned synthetic reactions, a

batch type reaction tank, a single-tank type or multi-tank type continuous reaction apparatus, or a tube-shaped continuous reaction apparatus may be used singly or in combination thereof, as appropriate.

In manufacturing the polyamide-based thermoplastic elastomer, polymerization temperature is preferably from 150 to 300°C, and more preferably from 160 to 280°C. Polymerization time may be appropriately determined in view of the relation between the average molecular weight of a polyamide-based thermoplastic elastomer to be synthesized and the polymerization temperature thereof, and is preferably from 0.5 to 30 hours, and more preferably from 0.5 to 20 hours.

In manufacturing the polyamide-based thermoplastic elastomer, an additive such as a monoamine or diamine, such as lauryl amine, stearylamine, hexamethylene diamine, or metaxylylene diamine; or a monocarboxylic acid or dicarboxylic acid, such as acetic acid, benzoic acid, stearic acid, adipic acid, sebacic acid, or dodecanedioic acid may be added in order to adjust the molecular weight and stabilize melt viscosity during mold processing, as needed. The additive may be appropriately selected in consideration of properties such as molecular weight or viscosity of a polyamide-based thermoplastic elastomer to be obtained so long as the additive does not adversely affect the advantageous effects of the invention.

In manufacturing the polyamide-based thermoplastic elastomer, a catalyst may be used, if necessary. Examples of the catalyst include a compound containing at least one selected from the group consisting of P, Ti, Ge, Zn, Fe, Sn, Mn, Co, Zr, V, Ir, La, Ce, Li, Ca, and Hf.

Examples of the catalysts include inorganic phosphoric compounds, organic titanium compounds, organic zirconium compounds, and organotin compounds.

Specifically, examples of the inorganic phosphoric compounds include a phosphor-containing acid such as phosphoric acid, pyrophosphoric acid, polyphosphoric acid, phosphorous acid, or hypophosphorous acid; an alkali metal salt of the phosphor-containing acid; and an alkaline earth metal salt of the phosphor-containing acid.

Examples of the organic titanium compounds include a titanium alkoxide (such as titanium tetrabutoxide, or titanium tetraisopropoxide).

Examples of the organic zirconium compounds include a zirconium alkoxide such as zirconium tetrabutoxide (also referred to as "$Zr(OBu)_4$" or "$Zr(OC_4H_8)_4$").

Examples of the organotin compounds include a distannoxane compound (such as 1-hydroxy -3-isothiocyanate-1,1,3,3-tetrabutyl distannoxane), tin acetate, dibutyl tin dilaurate, and butyltin hydroxide oxide hydrate.

The amount of the catalyst to be added and the timing of the addition thereof are not particularly limited, as long as a target product is rapidly obtained under the conditions.

As the polyamide-based thermoplastic elastomer, for example, a combination of a ring-opening polycondensate of lauryl lactam, polyethylene glycol, and adipic acid, a combination of a ring-opening polycondensate of lauryl lactam, polypropylene glycol, and adipic acid, a combination of a ring-opening polycondensate of lauryl lactam, polytetramethylene ether glycol, and adipic acid, a combination of a ring-opening polycondensate of lauryl lactam, and ABA-type triblock polyether, and adipic acid, a combination of a ring-opening polycondensate of lauryl lactam, an ABA-type triblock polyether diamine, and decanedicarboxylic acid, a combination of a ring-opening polycondensate of lauryl lactam, polyethylene glycol, and decanedicarboxylic acid, a combination of a ring-opening polycondensate of lauryl lactam, polypropylene glycol, and decanedicarboxylic acid, a combination of a ring-opening polycondensate of lauryl lactam, polytetramethylene ether glycol, and decanedicarboxylic acid, a combination of a ring-opening polycondensate of lauryl lactam, an ABA-type triblock polyether, and decanedicarboxylic acid, a combination of a ring-opening polycondensate of lauryl lactam, an ABA-type triblock polyether diamine, and decanedicarboxylic acid, a combination of a polycondensate of aminododecanoic acid, polyethylene glycol, and adipic acid, a combination of a polycondensate of aminododecanoic acid, polypropylene glycol, and adipic acid, a combination of a polycondensate of aminododecanoic acid, polytetramethylene ether glycol, and adipic acid, a combination of a polycondensate of aminododecanoic acid, ABA-type triblock polyether, and adipic acid, a combination of a polycondensate of aminododecanoic acid, an ABA-type triblock polyether diamine, and adipic acid, a combination of a polycondensate of aminododecanoic acid, polyethylene glycol, and decanedicarboxylic acid, a combination of a polycondensate of aminododecanoic acid, polypropylene glycol, and decanedicarboxylic acid, a combination of a polycondensate of aminododecanoic acid, polytetramethylene ether glycol, and decanedicarboxylic acid, a combination of a polycondensate of aminododecanoic acid, an ABA-type triblock polyether, and decanedicarboxylic acid, and a combination of a polycondensate of aminododecanoic acid, an ABA-type triblock polyether diamine, and decanedicarboxylic acid are preferred. A combination of a ring-opening polycondensate of lauryl lactam, an ABA-type triblock polyether, and adipic acid, a combination of a polycondensate of aminododecanoic acid, an ABA-type triblock polyether, and adipic acid, a combination of a polycondensate of aminododecanoic acid, an ABA-type triblock polyether diamine, and decanedicarboxylic acid, a combination of a polycondensate of aminododecanoic acid, polytetramethylene ether glycol, and adipic acid, and a combination of a polycondensate of aminododecanoic acid, polytetramethylene ether glycol, and decanedicarboxylic acid are particularly preferred. As the polyamide-based thermoplastic elastomer, a combination of preferred aspects may be used in which the combination, the constitutional ratio, and the molecular weight of a constituent unit have been described above.

(Polyester-based Thermoplastic Elastomer)

Examples of the polyester-based thermoplastic elastomers include a material in which at least a polyester forms a part or the whole of a hard segment which is crystalline and has a high melting point, and another polymer (such as a polyester or a polyether) forms a part or the whole of a soft segment which is non-crystalline and has a low glass transition temperature.

- Hard Segment -

As a crystalline polyester which forms a part or the whole of the hard segment in the polyester-based thermoplastic elastomer, an aromatic polyester may be used. The aromatic polyester may be formed from, for example, an aromatic dicarboxylic acid or any ester-forming derivative thereof and an aliphatic diol.

Examples of the aromatic polyester forming a part or the whole of the hard segment include polyethylene terephthalate, polybutylene terephthalate, polystyrene terephthalate, polyethylene naphthalate, and polybutylene naphthalate, and polybutylene terephthalate is preferable.

One example of a suitable aromatic polyester forming a part or the whole of the hard segment is polybutylene terephthalate derived from 1,4-butanediol and at least one selected from the group consisting of terephthalic acid and dimethyl terephthalate. Furthermore, examples of suitable aromatic polyesters forming a part or the whole of the hard segment include: a polyester derived from a dicarboxylic acid component (such as isophthalic acid, phthalic acid, naphthalene-2,6-dicarboxylic acid, naphthalene-2,7-dicarboxylic acid, diphenyl-4,4'-dicarboxylic acid, diphenoxyethanedicarboxylic acid, 5-sulfoisophthalic acid, or any ester-forming derivative thereof) and a diol component having a molecular weight of 300 or less [for example, an aliphatic diol such as ethylene glycol, trimethylene glycol, pentamethylene glycol, hexamethylene glycol, neopentyl glycol, or decamethylene glycol; an alicyclic diol such as 1,4-cyclohexanedimethanol or tricyclodecanedimethylol; and an aromatic diol such as xylylene glycol, bis(p-hydroxy)diphenyl, bis(p-hydroxyphenyl)propane, 2,2-bis[4-(2-hydroxyethoxy)phenyl]propane, bis[4-(2-hydroxy)phenyl]sulfone, 1,1-bis[4-(2-hydroxyethoxy)phenyl]cyclohexane, 4,4'-dihydroxy-p-terphenyl, or 4,4'-dihydroxy-p-quarterphenyl]; and a copolymerization polyester obtained using two or more species of at least one selected from the group consisting of the above-mentioned dicarboxylic acid components and diol components. Further examples of suitable aromatic polyester forming a part or the whole of the hard segment include those obtained by copolymerization of a multifunctional carboxylic acid component, a multifunctional oxy acid component, and a multifunctional hydroxy component, which are trifunctional or more multifunctional, in a range of 5% by mol or less with respect to the entire aromatic polyester.

- Soft Segment -

Examples of a polymer forming a part or the whole of the soft segment include a polymer selected from, for example, an aliphatic polyester or an aliphatic polyether.

Examples of aliphatic polyether include poly(ethylene oxide)glycol, poly(propylene oxide)glycol, poly(tetramethylene oxide)glycol, poly(hexamethylene oxide)glycol, a copolymer of ethylene oxide and propylene oxide, an ethylene oxide adduct of poly(propylene oxide)glycol, and a copolymer of ethylene oxide and tetrahydrofuran.

Examples of aliphatic polyester include poly(ε-caprolactone), polyenantholactone, polycaprylolactone, polybutylene adipate, and polyethylene adipate.

Among these aliphatic polyethers and aliphatic polyesters, poly(tetramethylene oxide)glycol, an ethylene oxide adduct of poly(propylene oxide)glycol, poly(ε-caprolactone), polybutylene adipate, and polyethylene adipate are preferable from the viewpoint of the elastic property of the obtained copolymer.

- Connection Portion -

The connection portion may be, for example, a moiety bound by a chain extender. The chain extender include those described above in relation with the polyamide-based thermoplastic elastomer. As a chain extender for the polyester-based thermoplastic elastomer, an aliphatic dicarboxylic acid, an alicyclic dicarboxylic acid, or an aromatic dicarboxylic acid is used from the viewpoint of reactivity.

- Molecular Weight -

The number average molecular weight of the polymer (polyester) forming a part or the whole of the hard segment is preferably from 300 to 6,000 from the viewpoints of toughness and low-temperature flexibility. The number average molecular weight of the polymer forming a part or the whole of the soft segment is preferably from 300 to 6,000 from the viewpoints of toughness and low-temperature flexibility. The volume ratio (a:b) between the hard segment (a) and the

soft segment (b) is preferably from 99:1 to 20:80, more preferably from 98:2 to 30:70, and still more preferably from 98:2 to 57:43, from the viewpoint of moldability.

The polyester-based thermoplastic elastomer can be synthesized by copolymerizing, by a known method, a polymer forming a part or the whole of the hard segment and a polymer forming a part or the whole of the soft segment.

As the polyester-based thermoplastic elastomer, commercially available products can also be used. Examples thereof include the "HYTREL" series (for example, 3046, 5557, 6347, 4047, or 4767) available from Du Pont-Toray Co., Ltd., and the "PELPRENE" series (for example, P30B, P40B, P40H, P55B, P70B, P150B, P250B, E450B, P150M, S1001, S2001, S5001, S6001, or S9001) available from Toyobo Co., Ltd.

The resinous material may include various additives, as desired, such as rubber, various fillers (for example, silica, calcium carbonate, or clay), anti-aging agents, oils, plasticizers, colorants, weathering stabilizers, and reinforcing materials. The contents of the additives in the resinous material (tire frame) are not particularly limited, and the additives may be used, as appropriate, in a range in which the effect according to the invention is not impaired. When non-resinous components, such as additives, are added to the resinous material, the content of resin component in the resinous material is 50% by mass or more, and preferably 90% by mass or more, with respect to the total amount of the resinous material. The content of resin component in the resinous material is the balance remaining after subtracting the total content of the various additives from the total amount of the resin components.

< Physical Properties of Resinous Material >

Next, preferable physical properties of the resinous material forming a part or the whole of the tire frame will be described. The tire frame is formed using the resinous material.

The melting point (or softening point) of the resinous material (tire frame) is ordinarily from 100°C to 350°C, and preferably from about 100°C to about 250°C. From the viewpoint of tire productivity, the melting point (or softening point) is preferably from about 120°C to about 250°C, and more preferably from 120°C to 200°C.

When, for example, a tire frame is formed by fusing divided parts (frame pieces) of the tire frame, use of a resinous material having a melting point of 120 °C to 250 °C provides a sufficient adhesive strength between tire frame pieces in a frame formed by fusing at a surrounding temperature of 120 °C to 250 °C. Therefore, the tire according to the invention has excellent durability at running, such as puncture resistance or wear resistance. The heating temperature described above is preferably a temperature that is 10 °C to 150 °C higher than the melting point (or softening point) of the resinous material forming a part or the whole of the tire frame, and more preferably a temperature that is 10 °C to 100 °C higher than the melting point (or softening point) of the resinous material forming a part or the whole of the tire frame.

The resinous material can be obtained by adding various additives, if necessary, and appropriately mixing the ingredients by a known method (for example, melt mixing). The resinous material obtained by melt mixing may be shaped into pellets, if necessary, and used.

The tensile strength at yield as defined in Japanese Industrial Standards (JIS) K7113:1995 of the resinous material (tire frame) itself is preferably 5 MPa or more, more preferably from 5 MPa to 20 MPa, and still more preferably from 5 MPa to 17 MPa. When the tensile strength at yield of the resinous material is 5 MPa or more, the resinous material can endure deformation due to a load applied to the tire at, for example, running.

The tensile elongation at yield as defined in JIS K7113:1995 of the resinous material (tire frame) is preferably 10% or more, preferably from 10% to 70%, and still more preferably from 15% to 60%. When the tensile elongation at yield of the resinous material is 10% or more, the elastic range is large, and air-sealing property can be improved.

The tensile elongation at break as defined in JIS K7113:1995 of the resinous material (tire frame) itself is preferably 50% or more, more preferably 100% or more, still more preferably 150% or more, and particularly preferably 200% or more. When the tensile elongation at break of the resinous material is 50% or more, fittability to a rim is excellent, and the tire is resistant to breakage upon impact.

The deflection temperature under load as defined in ISO75-2 or ASTM D648 of the resinous material (tire frame) itself (under a load of 0.45 MPa) is preferably 50 °C or higher, preferably from 50 °C to 150 °C, and more preferably from 50 °C to 130 °C. When the deflection temperature under load of the resinous material is 50 °C or higher, deformation of the tire frame can be reduced even when vulcanization is performed in tire production.

[First Embodiment]

A tire according to a first embodiment of the invention is described below with reference to drawings.

A tire 10 according to this embodiment is described below. FIG. 1A is a perspective view illustrating a cross-section of a part of a tire according to one embodiment of the invention, and FIG. 1B is a cross-sectional view of a bead portion mounted on a rim. As illustrated in FIG. 1A, the tire 10 according to the present embodiment has a cross-sectional shape that is substantially similar to those of conventional ordinary pneumatic rubber tires.

As illustrated in FIG. 1A, the tire 10 includes a tire case (tire frame) 17 that includes: a pair of bead portions 12

that contact a bead sheet portion 21 and a rim flange 22 of a rim 20 illustrated in FIG. 1B; side portions 14 that each outwardly extend from a bead portion 12 in the tire radial direction; and a crown portion (outer circumferential portion) 16 that connects the tire-radial-direction outer end of one side portion 14 and the tire-radial-direction outer end of the other side portion 14.

In the tire case 17 according to the present embodiment, a resinous material including a thermoplastic elastomer that includes a hard segment, a soft segment, and a connection portion connecting two or more segments, in which a difference in SP values, in absolute value, between the soft segment and the connection portion is 7.7 or less, and in which each additive is added, may be used.

Although the tire case 17 is made of a single resinous material in the present embodiment, the invention is not limited to this configuration, and thermoplastic resinous materials having different properties may be used for the respective parts of the tire case 17 (for example, side portions 14, a crown portion 16, and bead portions 12), similar to conventional ordinary rubber pneumatic tires. Further, a reinforcing member (for example, a polymer or metal fiber, cord, non-woven fabric, or woven fabric) may be embedded in the tire case 17 (for example, in the bead portions 12, in the side portions 14 or in the crown portion 16), so as to reinforce the tire case 17 with the reinforcing member.

The tire case 17 according to the present embodiment is a member obtained by joining together a pair of tire case half parts (tire frame pieces) 17A formed only of a resinous material. Each tire case half part 17A is formed by producing an integrated body composed of one bead portion 12, one side portion 14 and a half-width part of the crown portion 16 by molding such as injection molding. The tire case 17 is formed by disposing the formed tire case half parts 17A, which have the same annular shape, to face to each other, and joining them together at the tire equatorial plane. The tire case 17 is not limited to those obtained by joining together two members, and may be formed by joining together three or more members.

Each of the tire case half parts 17A formed using at least the above-described resinous material may be shaped using, for example, vacuum molding, pressure forming, injection molding or melt casting. Therefore, vulcanization is unnecessary, the production process can greatly be simplified, and the forming time can be saved, as compared to the case of forming a tire case with rubber as in conventional techniques.

In the present embodiment, the tire case half parts 17A have a bilaterally symmetric shape, i.e., one of the tire case half parts 17A has the same shape as the other tire case half part 17A. Therefore, there is also an advantage in that only one type of mold is required for forming the tire case half parts 17A.

In the present embodiment, an annular bead core 18 made only of a steel cord similar to those used in conventional ordinary pneumatic tires is embedded in each of the bead portions 12, as illustrated in Fig. 1B. However, the invention is not limited to this configuration, and the bead core 18 may be omitted as long as it is ensured that the bead portion 12 has rigidity, and mounting on the rim 20 can be performed successfully. The bead core 18 may alternatively be formed using, for example, an organic fiber cord, a resin-coated organic fiber cord, or a hard resin, instead of a steel cord.

In the present embodiment, an annular sealing layer 24 formed of a material (for example, rubber) having a higher sealing property than that of the resinous material forming a part or the whole of the tire case 17 is provided on a part of the bead portion 12 that contacts the rim 20 or at least on a part of the bead portion 12 that contacts the rim flange 22 of the rim 20. The sealing layer 24 may also be provided in a part in which the tire case 17 (the bead portion 12) and the bead seat 21 contact each other. A material softer than the resinous material that forms a part or the whole of the tire case 17 may be used as the material having a higher sealing property than that of the resinous material that forms a part or the whole of the tire case 17. As rubbers usable for the sealing layer 24, the same types of rubbers as the rubbers used on the outer surfaces of the bead portions of conventional ordinary pneumatic rubber tires are preferably used. Another thermoplastic resin (thermoplastic elastomer) having a higher sealing property than that of the resinous material may be used. Examples of another thermoplastic resin include a polyurethane-based resin, a polyolefin-based resin, a polystyrene-based thermoplastic resin, or a polyester resin, or a blend of any of these resins with a rubber or an elastomer. It is also possible to use a thermoplastic elastomer, such as a polyester-based thermoplastic elastomer, a polyurethane-based thermoplastic elastomer, a polystyrene-based thermoplastic elastomer, a polyolefin-based thermoplastic elastomer, or a combination of two or more of these elastomers or a blend of any of these elastomers with a rubber.

As illustrated in Fig. 1A, a reinforcing cord 26 having a higher rigidity than that of the resinous material forming a part or the whole of the tire case 17 is wound around the crown portion 16 in the circumferential direction of the tire case 17. The reinforcing cord 26 is helically wound to form a reinforcing cord layer 28 in a state in which at least a part of the reinforcing cord 26 is embedded in the crown portion 16 in cross-sectional view taken along the axial direction of tire case 17. A crown 30 formed of a material (for example, rubber) having a higher wear resistance than that of the resinous material forming a part or the whole of the tire case 17 is disposed at the tire-radial-direction outer circumferential side of the reinforcing cord layer 28.

The reinforcing cord layer 28 formed by the reinforcing cord 26 is described below with reference to Fig. 2. Fig. 2 is a cross-sectional view taken along the tire rotation axis, which illustrates a state in which the reinforcing cord is

embedded in the crown portion of the tire case of the tire according to the first embodiment. As illustrated in Fig. 2, the reinforcing cord 26 is helically wound in a state in which at least a part of the reinforcing cord 26 is embedded in the crown portion 16 in a cross-sectional view taken along the axial direction of the tire case 17, and, together with a part of the outer circumferential portion of the tire case 17, forms the reinforcing cord layer 28 indicated by the intermittent lines in Fig. 2. The part of the reinforcing cord 26 that is embedded in the crown portion 16 is in close contact with the resinous material forming a part or the whole of the crown portion 16 (the tire case 17). A monofilament (single filament) of a metal fiber, an organic fiber, or a multifilament (stranded filament) in which such fibers are stranded, such as a steel cord composed of stranded steel fibers, may be used as the reinforcing cord 26. In the present embodiment, a steel cord is used as the reinforcing cord 26.

The depth L of embedding in Fig. 2 illustrates the depth of embedding of the reinforcing cord 26 in the tire case 17 (the crown portion 16) along the tire rotation axis direction. The depth L of embedding of the reinforcing cord 26 in the crown portion 16 is preferably equal to or greater than 1/5 of the diameter D of the reinforcing cord 26, and more preferably more than 1/2 of the diameter D of the reinforcing cord 26. It is most preferable that the entire reinforcing cord 26 is embedded in the crown portion 16. When the depth L of embedding of the reinforcing cord 26 is more than 1/2 of the diameter D of the reinforcing cord 26, the reinforcing cord 26 is difficult to drop off from the embedded portion due to the dimensions of the reinforcing cord 26. When the entire reinforcing cord 26 is embedded in the crown portion 16, the surface (the outer circumferential surface) becomes flat, whereby entry of air into an area around the reinforcing cord can be reduced even when a member is placed on the crown portion 16 in which the reinforcing cord 26 is embedded. The reinforcing cord layer 28 corresponds to a belt disposed on the outer circumferential surface of a carcass of a conventional pneumatic rubber tire.

As described above, a tread 30 is disposed on the tire-radial-direction outer circumferential side of the reinforcing cord layer 28. It is preferable that the same type of rubber as that used for conventional pneumatic rubber tires is used as the rubber used for the tread 30. A tread formed of another type of resinous material having higher wear resistance than that of the resinous material forming a part or the whole of the tire case 17 may be used, in place of the tread 30. In the tread 30, a tread pattern composed of plural grooves is formed on the contact surface that comes into contact with a road surface, similar to conventional pneumatic rubber tires.

A method of manufacturing a tire according the present embodiment is described below.

(Tire Case Forming Process)

First, tire case half parts are formed using a resinous material including the thermoplastic resin elastomer, as described above. The forming of these tire cases is preferably performed using injection-molding. Then, the tire case half parts supported by thin metal support rings are aligned to face each other. Subsequently, a joining mold (not illustrated in the drawings) is placed so as to contact the outer circumferential surface of a butt portion of the tire case half parts. The joining mold is configured to pressurize a region at or around the joint portion (the butt portion) of the tire case half parts 17A with a predetermined pressure. Then, the pressure is applied to the region at or around the joint portion of the tire case half parts at a temperature equal to higher than the melting point (or softening point) of the resinous material that forms a part or the whole of the tire case. When the joint portion of the tire case half parts is heated and pressurized by the joining mold, the joint portion is melted, and the tire case half parts are fused with each other, as a result of which the members are integrated to form the tire case 17. Although joint portion of the tire case half parts is heated using the joining mold in the present embodiment, the invention is not limited thereto; heating of the joint portion may be carried out using, for example, a separately provided high frequency heater, or the tire case half parts may be bonded by softening or melting the joint portion, in advance, via application of hot air, or irradiation with infrared radiation, and applying a pressure to the joint portion using the jointing mold.

(Reinforcing Cord Member Winding Process)

Although not illustrated in the drawings, the reinforcing cord layer 28 can be formed on the outer circumferential side of the crown portion 16 of the tire case 17 by embedding while winding the heated reinforcing cord 26 around the outer circumferential surface of the crown portion 16, using a cord feeding apparatus equipped with a reel on which a reinforcing cord 26 is wound, a cord heating device, and various rollers.

In this way, a reinforcing cord layer 28 is formed on the outer circumferential side of the crown portion 16 of the tire case 17 by winding the heated reinforcing cord 26 on the outer circumferential surface of the crown portion 16 such that the heated reinforcing cord 26 is embedded in the outer circumferential surface of the crown portion 16.

Then, a belt-shaped vulcanized tread 30 is wound on the outer circumferential surface of the tire case 17 for one revolution, and the tread 30 is bonded to the outer circumferential surface of tire case 17 using, for example, an adhesive. For example, precured treads known thus far for used in retreated tires may be used as the tread 30. The present process is a process similar to the process of bonding a precured tread to the outer circumferential surface of

a casting of a retreaded tire.

A tire 10 can be completed by bonding a sealing layer 24 formed only of a vulcanized rubber to the bead portion 12 of the tire case 17 using, for example, an adhesive.

(Effects)

The tire 10 according to an embodiment includes a tire case 17 formed from a resinous material including a thermoplastic elastomer which has a hard segment, a soft segment, and a connection portion connecting two or more segments, in which a difference in SP values, in absolute value, between the soft segment and the connection portion is 7.7 or less. Accordingly, the tire 10 according to the embodiment has improved low loss properties and improved fittability to a rim.

In the tire 10 according to an embodiment, the reinforcing cord 26 having higher stiffness than the resinous material is helically wound in the circumferential direction around the outer circumferential surface of the crown portion 16 of the tire case 17 made of the resinous material, whereby puncture resistance, cut resistance, and stiffness in the circumferential direction of the tire 10 are improved. The improvement in stiffness in the circumferential direction of tire 10 prevents the creeping of the tire case 17 made of the resinous material.

Furthermore, since at least a part of the reinforcing cord 26 is embedded in the outer circumferential surface of the crown portion 16 of the tire case 17 formed from the resinous material and is closely adhered to the resinous material in the cross-sectional view taken along the axial direction of the tire case 17 (the cross-section illustrated in FIG. 1A), entry of air during production is reduced, and the displacement of the reinforcing cord 26, for example, due to applied force during running is reduced. As a result, for example, abrasion of the reinforcing cord 26, the tire case 17, and the tread 30 is reduced, resulting in the improvement in durability of the tire 10.

Furthermore, since the depth L of embedding of the reinforcing cord 26 is 1/5 or more of the diameter D as illustrated in FIG. 2, entry of air during production is efficiently reduced, and the displacement of the reinforcing cord 26, for example, due to applied force during running is further suppressed.

Moreover, since the annular bead core 18 made of a metal material is embedded in the bead portion 12, the tire case 17, or the tire 10 is robustly supported on the rim 20 as in the case of conventional pneumatic rubber tires.

Furthermore, since the sealing layer 24 formed of a rubber material having a superior sealing property than that of the resinous material forming a part or the whole of the tire case 17 is provided on a part of the bead portion 12 that contacts the rim 20, sealing property between the tire 10 and the rim 20 is improved. Consequently, the air leaking within the tire is further reduced, as compared to a case in which the tire is sealed only with the rim 20 and the resinous material forming a part or the whole of the tire case 17. In addition, the installation of the sealing layer 24 also improves the fittability to a rim.

Although the first embodiment is configured such that the reinforcing cord 26 is heated, an embodiment in which the outer circumference of the reinforcing cord 26 may be covered, for example, using the same resinous material as the tire case 17 may be employed. In this case, the covering resinous material is heated together with the reinforcing cord 26 when the covered reinforcing cord is wound around the crown portion 16 of the tire case 17, whereby entry of air during the embedment of the reinforcing cord into the crown portion 16 can be efficiently reduced.

The reinforcing cord 26 is helically wound from the easiness in production. However, the reinforcing cord 26 may be wound in another method in which the reinforcing cord 26 is discontinuous in the width direction of the tire.

Although the tire 10 according to the first embodiment is a so-called tubeless tire in which an air room is formed between the tire 10 and the rim 20 by mounting the bead portion 12 on the rim 20, the invention is not limited to this configuration, and the tire may have a complete tube shape.

EXAMPLES

The invention is more specifically described below by reference to examples. However, the invention is not limited thereto.

[Example 1]

First, 43.7 g of 12-aminododecanoic acid (available from ALDRICH CHEMICAL COMPANY, INC.), 601 g of aminododecanolactam (available from ALDRICH CHEMICAL COMPANY, INC.), and 24.4 g of dodecanedioic acid (a chain extender which serves as a connection portion; available from ALDRICH CHEMICAL COMPANY, INC.) were added into a reaction vessel having a capacity of 2L and equipped with a stirrer, a nitrogen gas inlet, and a condensed water discharge port. The air inside the reaction vessel was sufficiently replaced by nitrogen, and then the temperature was raised to 280 °C and a reaction was allowed to proceed for 4 hours at a pressure elevation of 0.6 MPa. After the pressure was relieved, a reaction was allowed to proceed for another 1 hour under nitrogen flow, whereby a white solid,

which was a Nylon 12 polymer having a weight average molecular weight of 6,000 (i.e., a hard segment "PA12" with a chain extender connected to a terminal thereof), was obtained (polymerization reaction A).

To 250 g of the thus-obtained Nylon 12 polymer, 83.3 g of polyoxypropylene diamine (PPG, available from Huntsman Corporation, ELASTAMINE RP-2009, weight average molecular weight: 2,000) as a soft segment and 71 mg of tetra-tert-butoxyzirconium were added, and the mixture was stirred for 6 hours at 230 °C (polymerization reaction B). Then, 1 g of Irganox1010 was added thereto, thereby obtaining a white polyamide-based thermoplastic elastomer (weight average molecular weight: 80,000). The resultant polyamide-based thermoplastic elastomer was formed into pellets, which were then subjected to injection-molding at 220 °C, thereby obtaining sample pieces. A variety of measurements were performed by using the samples punched out from these sample pieces as test pieces.

[Example 2]

A white polyamide-based thermoplastic elastomer (weight average molecular weight: 100,000) was obtained in the same manner as in Example 1 except that 36.3 g of eicosanedioic acid (available from Tokyo Chemical Industry Co., Ltd.) was used instead of 24.4 g of dodecanedioic acid.

[Example 8]

A white polyamide-based thermoplastic elastomer (weight average molecular weight: 77,000) was obtained in the same manner as in Example 1, except that 83.3 g of polytetramethylene glycol diamine (PTMG with aminated terminals obtained by the following method; weight average molecular weight: 2,000) was used instead of 83.3 g of polyoxypropylene diamine.

Amination method: A raw material, i.e., polytetramethylene glycol having hydroxyl groups at both terminals (PTMG, available from Wako Pure Chemical Industries, Ltd., Manufacturer's code: 164-17745, weight average molecular weight: 2,000) was reacted with tosyl chloride for tosylation, followed by azidation using sodium azide and a reduction reaction using a platinum catalyst, thereby synthesizing a PTMG having amines at both terminals.

[Comparative Example 1]

A white polyamide-based thermoplastic elastomer (weight average molecular weight: 80,000) was obtained in the same manner as in Example 1 except that 15.5 g of adipic acid (available from ALDRICH CHEMICAL COMPANY, INC.) was used instead of 24.4 g of dodecanedioic acid.

[Evaluation]

Thermoplastic elastomers obtained in Examples and Comparative Example were evaluated for the following items. The results are shown in Table 1.

(Low-Loss Property)

Loss tangent (tanδ) of samples each having a diameter of 8 mm and a thickness of 2 mm was measured at a temperature of 30 °C, a distortion of 1%, and a frequency of 20 Hz using a viscoelasticity measurement device (available from Rheometric Scientific Inc). As the tanδ is smaller, the low-loss property is better.

The measured values of low-loss property obtained by the above method were calculated based on the value in Example 8, which had the lowest loss tangent, as 100 to obtain equivalent values. The equivalent values of from 100 to 140 were evaluated as "A", and the equivalent values of 141 or higher were evaluated as "B".

(Fittability to Rim)

A tire was formed using each of the thermoplastic elastomers obtained in Examples and Comparative Example, with reference to the first embodiment described above. The tire was then mounted on a rim. A case in which the air-sealing property was ensured was evaluated as "A", a case in which fitting was difficult and handling property was poor was evaluated as "B", and a case in which the air-sealing property was not ensured was evaluated as "C".

(Heat Resistance)

Each of the thermoplastic elastomers obtained in Examples and Comparative Example was heated from 0 °C to 200 °C with an increase of 10°C/min, using a differential scanning calorimeter (DSC) (available from TA Instruments

Japan Inc., DSC Q2000). A case in which the melt onset temperature was 155 °C or higher was evaluated as "A", a case in which the melt onset temperature was 145 °C or higher and less than 155 °C was evaluated as "B", and a case in which the melt onset temperature was less than 145 °C was evaluated as "C".

Table 1

| | | Example 1 | Example 2 |
|---|---|---|---|
| Thermoplastic Elastomer | Type | TPA | TPA |
| | HS | PA12 | PA12 |
| | SS | PPG | PPG |
| | Connection portion | Dodecanedioic acid | Eicosanedioic acid |
| | HS/SS mass (mass ratio) | 75/25 | 75/25 |
| SP Value (MPa) | SP value of coupling part | 21.1 | 19.6 |
| | SP value of SS | 18 | 18 |
| | ΔSP value (\|SP value of connection portion − SP value of SS\|) | 3.1 | 1.6 |
| Polymerization Condition | Polymerization reaction A | 280°C/5 hours | 280°C/5 hours |
| | Polymerization reaction B | 230°C/6 hours | 230°C/6 hours |
| Evaluation Results | Low loss property (equivalent values) | A (140) | A (118) |
| | Rim fittability | A | A |
| | Heat resistance (measured values) | A (172°C) | A (170°C) |

Table 1 (continued)

| | | Example 8 | Comparative Example 1 |
|---|---|---|---|
| Thermoplastic Elastomer | Type | TPA | TPA |
| | HS | PA12 | PA12 |
| | SS | PTMG | PPG |
| | Connection portion | Dodecanedioic acid | Adipic acid |
| | HS/SS mass (mass ratio) | 75/25 | 75/25 |
| SP Value (MPa) | SP value of coupling part | 21.1 | 25.9 |
| | SP value of SS | 18.9 | 18 |
| | ΔSP value (\|SP value of connection portion − SP value of SS\|) | 2.2 | 7.9 |
| Polymerization Condition | Polymerization reaction A | 280°C/5 hours | 280°C/5 hours |
| | Polymerization reaction B | 230°C/6 hours | 230°C/6 hours |
| Evaluation Results | Low loss property (equivalent values) | A (100) | B (185) |
| | Rim fittability | A | C |
| | Heat resistance (measured values) | A (162°C) | A (175°C) |

In Table 1, "HS" refers to a hard segment, and "SS" refers to a soft segment.

In Table 1, "PA12" means that the component is derived from Nylon 12, "PA6" means that the component is derived from Nylon 6, "MDI" means that the component is derived from a polyurethane formed from 4,4'-diphenylmethane diisocyanate and 1,4-butanediol, "PBT" means that the component is derived from polybutylene terephthalate, "PPG" means that the component is derived from polypropylene glycol, and "PTMG" means that the component is derived from polytetramethylene glycol. Moreover, "PPG-PTMG-PPG" means a ternary copolymer including a structural unit derived from PTMG and a structural unit derived from PPG.

As shown in Table 1, in the Comparative Example in which the difference in SP values, in absolute value, between the connection portion and the soft segment of the thermoplastic elastomer was more than 7.7, the low-loss property was maintained, but fittability to a rim was poor as compared to the Examples, and thus good balance between the low-loss property and the fittability to a rim was not achieved.

## Claims

1. A tire comprising a circular tire frame formed of a resinous material,
the resinous material comprising a resin component,
the resin component comprising at least one thermoplastic elastomer selected from the group consisting of a polyamide-based thermoplastic elastomer and a polyester-based thermoplastic elastomer,
the resin component being comprised in an amount of 50% by mass or more with respect to a total amount of the resinous material,
the polyamide-based thermoplastic elastomer comprising a hard segment comprising a polyamide, a soft segment comprising at least one selected from the group consisting of a polyester and a polyether, and a connection portion that connects two or more segments,
the polyester-based thermoplastic elastomer comprising a hard segment comprising an aromatic polyester, a soft

segment comprising at least one selected from the group consisting of an aliphatic polyester and an aliphatic polyether, and a connection portion that connects two or more segments,
wherein a difference in a solubility parameter (SP value), in absolute value, between the soft segment and the connection portion is 7.7 or less, the SP value being calculated in accordance with the following equation:

$$\text{(Equation a): } \delta = [(\Delta H - RT) / V]^{1/2}$$

wherein $\delta$ represents an SP value $(MPa)^{1/2}$ , $\Delta H$ represents an enthalpy of vaporization, R represents a gas constant, T represents an absolute temperature, and V represents a volume, and
wherein the connection portion comprises a structural unit derived from an aliphatic dicarboxylic acid, a structural unit derived from an alicyclic dicarboxylic acid, or a structural unit derived from an aromatic dicarboxylic acid.

2. The tire according to claim 1, wherein the difference in the SP value, in absolute value, is 6.0 or less.

3. The tire according to claim 1 or 2, wherein the resinous material consists of the thermoplastic elastomer.

## Patentansprüche

1. Reifen, der einen kreisförmigen Reifenrahmen umfasst, der aus einem harzhaltigen Werkstoff geformt ist, wobei der harzhaltige Werkstoff einen Harzbestandteil umfasst,
wobei der Harzbestandteil mindestens ein thermoplastisches Elastomer umfasst, das aus der Gruppe ausgewählt ist, die aus einem thermoplastischen Elastomer auf Polyamidgrundlage und einem thermoplastischen Elastomer auf Polyestergrundlage besteht,
wobei der Harzbestandteil in einer Menge von 50 Gew.-% oder mehr in Bezug auf eine Gesamtmenge des harzhaltigen Werkstoffs enthalten ist,
wobei das thermoplastische Elastomer auf Polyamidgrundlage ein hartes Segment, das ein Polyamid umfasst, ein weiches Segment, das mindestens eines umfasst, das aus der Gruppe ausgewählt ist, die aus einem Polyester und einem Polyether besteht, und einen Verbindungsabschnitt, der zwei oder mehr Segmente verbindet, umfasst,
wobei das thermoplastische Elastomer auf Polyestergrundlage ein hartes Segment, das einen aromatischen Polyester umfasst, ein weiches Segment, das mindestens eines umfasst, das aus der Gruppe ausgewählt ist, die aus einem aliphatischen Polyester und einem aliphatischen Polyether besteht, und einen Verbindungsabschnitt, der zwei oder mehr Segmente verbindet, umfasst,
wobei eine Differenz bei einem Löslichkeitsparameter (SP-Wert), in absolutem Wert, zwischen dem weichen Segment und dem Verbindungsabschnitt 7,7 oder weniger beträgt, wobei der SP-Wert entsprechend der folgenden Gleichung berechnet wird:

$$\text{(Gleichung a): } \delta = [(\Delta H - RT/V]^{1/2},$$

wobei $\delta$ einen SP-Wert $(MPa)^{1/2}$ darstellt, $\Delta H$ eine Verdampfungsenthalpie darstellt, R eine Gaskonstante darstellt, T eine absolute Temperatur darstellt und V ein Volumen darstellt, und
wobei der Verbindungsabschnitt eine strukturelle Einheit, die von einer aliphatischen Dicarbonsäure abgeleitet ist, eine strukturelle Einheit, die von einer alizyklischen Dicarbonsäure abgeleitet ist, oder eine strukturelle Einheit, die von einer aromatischen Dicarbonsäure abgeleitet ist, umfasst.

2. Reifen nach Anspruch 1, wobei die Differenz bei dem SP-Wert, in absolutem Wert, 6,0 oder weniger beträgt.

3. Reifen nach Anspruch 1 oder 2, wobei der harzhaltige Werkstoff aus dem thermoplastischen Elastomer besteht.

## Revendications

1. Bandage pneumatique, comprenant un cadre de bandage pneumatique circulaire formé à partir d'un matériau résineux, le matériau résineux comprenant un composant de résine ;
le composant de résine comprenant au moins un élastomère thermoplastique sélectionné dans le groupe constitué

d'un élastomère thermoplastique à base de polyamide et d'un élastomère thermoplastique à base de polyester ;
le composant de résine étant compris dans une quantité représentant 50% en poids ou plus par rapport à une quantité totale du matériau résineux ;
l'élastomère thermoplastique à base de polyamide comprenant un segment dur comprenant un polyamide, un segment mou comprenant au moins un matériau sélectionné dans le groupe constitué d'un polyester et d'un polyéther, et une partie de connexion connectant deux ou plusieurs segments ;
l'élastomère thermoplastique à base de polyester comprenant un segment dur comprenant un polyester aromatique, un segment doux comprenant au moins un matériau sélectionné dans le groupe constitué d'un polyester aliphatique et d'un polyéther aliphatique, et une partie de connexion connectant deux ou plusieurs segments ;
dans lequel une différence dans un paramètre de solubilité (valeur SP), en valeur absolue, entre le segment mou et la partie de connexion correspond à 7,7 ou moins, la valeur SP étant calculée selon l'équation ci-dessous :

$$\text{(équation a) : } \delta = [(\Delta H - RT)/V]^{1/2}$$

dans lequel $\delta$ représente une valeur SP $(MPa)^{1/2}$, $\Delta H$ représente une enthalpie de vaporisation, R représente une constante de gaz, T représente une température absolue et V représente un volume ; et
dans lequel la partie de connexion comprend une unité structurale dérivée d'un acide dicarboxylique aliphatique, une unité structurale dérivée d'un acide dicarboxylique alicyclique, ou une unité structurale dérivée d'un acide dicarboxylique aromatique.

2. Bandage pneumatique selon la revendication 1, dans lequel la différence dans la valeur SP, en valeur absolue, correspond à 6,0 ou moins.

3. Bandage pneumatique selon la revendication 1 ou 2, dans lequel le matériau résineux est constitué par l'élastomère thermoplastique.

FIG.1A

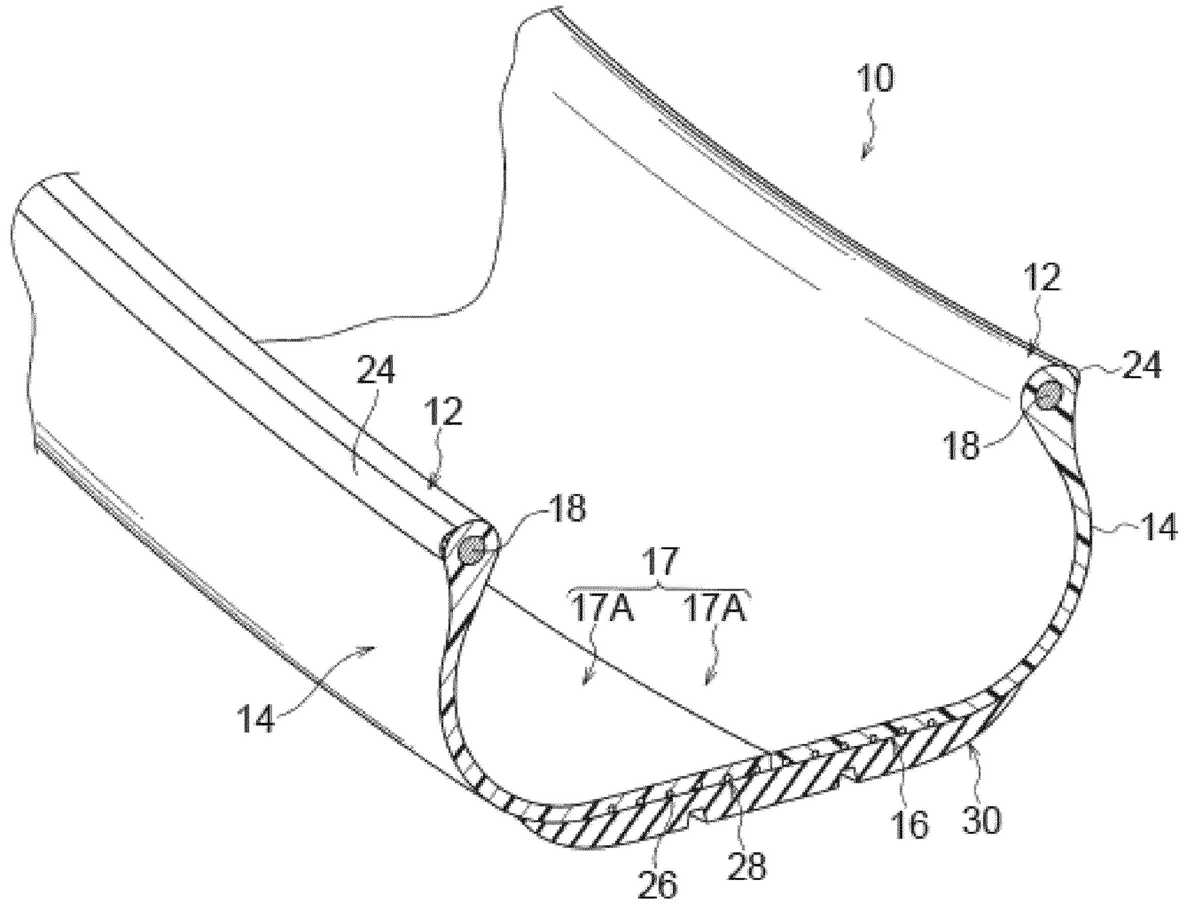

FIG.1B

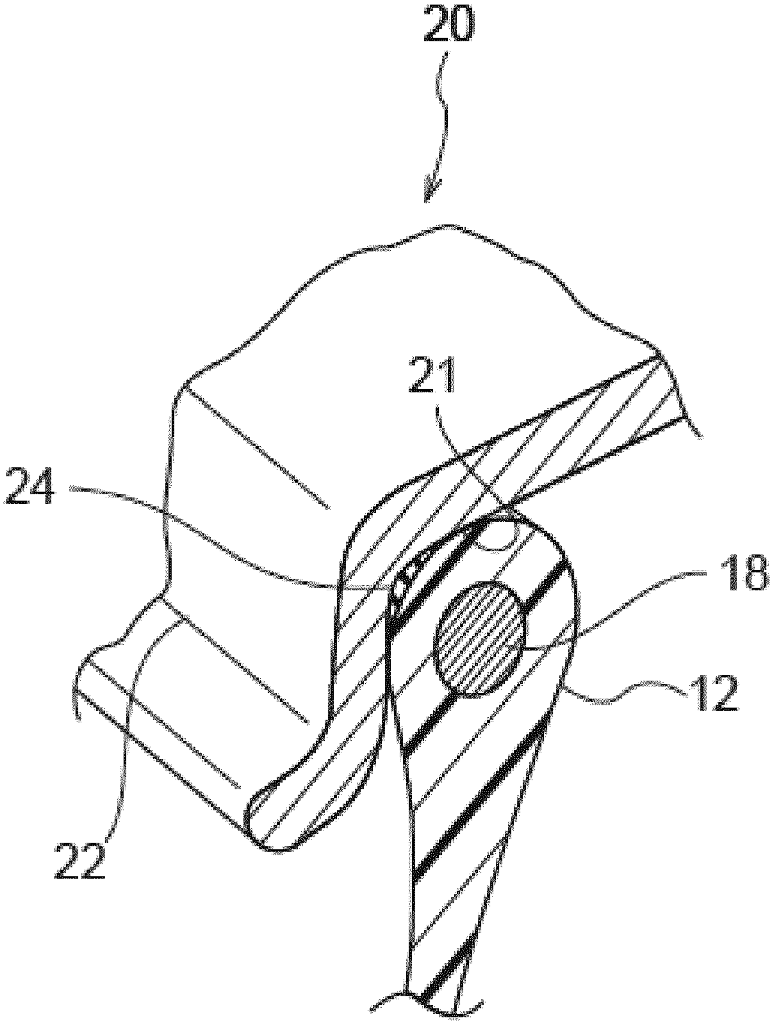

FIG.2

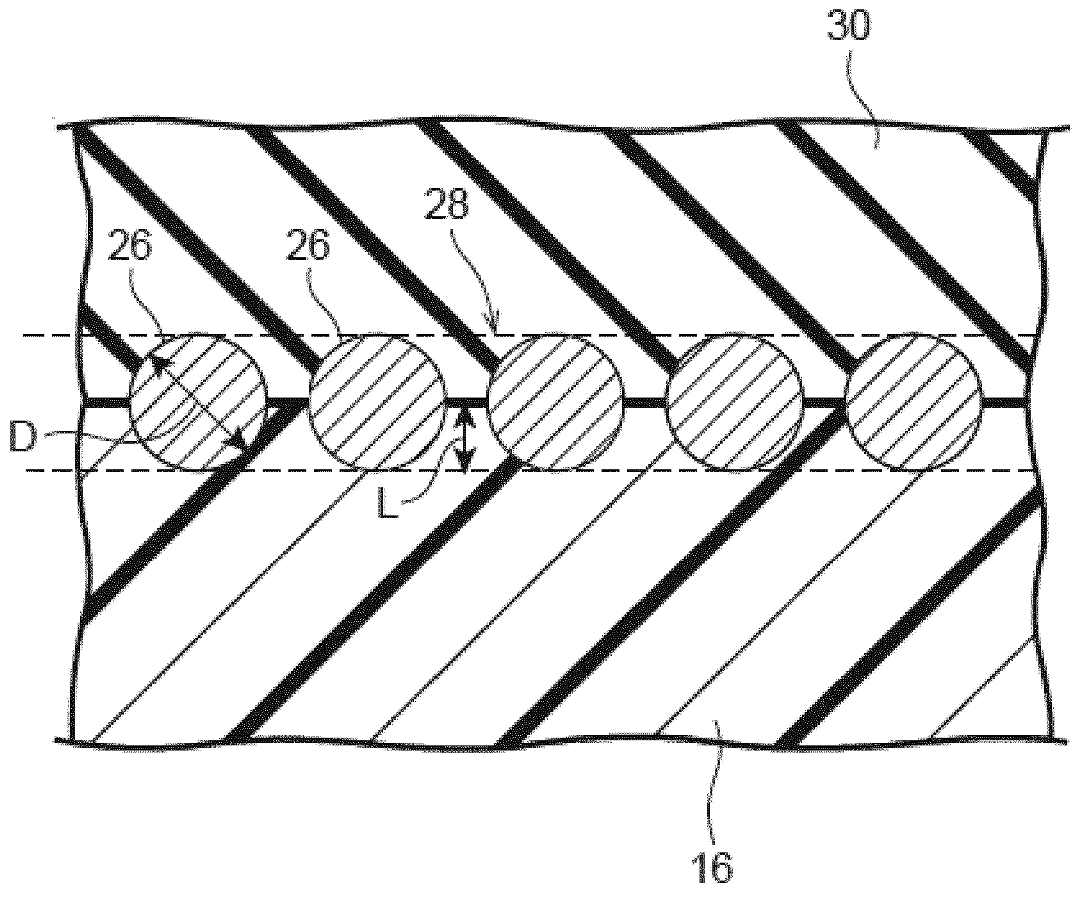

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2012046030 A
- US 2014124114 A
- JP 2014037551 A